(19) Europäisches Patentamt / European Patent Office / Office européen des brevets

(11) **EP 4 430 432 B1**

(12) **FASCICULE DE BREVET EUROPEEN**

(45) Date de publication et mention
de la délivrance du brevet:
**14.01.2026   Bulletin 2026/03**

(21) Numéro de dépôt: **22814049.7**

(22) Date de dépôt: **08.11.2022**

(51) Classification Internationale des Brevets (IPC):
**G01T 1/16** *(2006.01)*      **G01T 3/00** *(2006.01)*
**G01T 1/178** *(2006.01)*

(52) Classification Coopérative des Brevets (CPC):
**G01T 1/178; G01T 1/16; G01T 3/00**

(86) Numéro de dépôt international:
**PCT/EP2022/081180**

(87) Numéro de publication internationale:
**WO 2023/083832 (19.05.2023 Gazette 2023/20)**

(54) **DÉTECTEUR DE RAYONNEMENT IONISANT COMPORTANT UN MODULATEUR POUR MODULER L'INTENSITÉ DU RAYONNEMENT**

STRAHLUNGSDETEKTOR FÜR IONISIERENDE STRAHLUNG UMFASSEND EINEN MODULATOR UM DIE EINFALLENDE STRAHLUNG ZU MODULIEREN.

IONIZING RADIATION DETECTOR WITH A MODULATOR FOR MODULATING THE INCIDENT RADIATION INTENSITY

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:   **09.11.2021   FR 2111845**

(43) Date de publication de la demande:
**18.09.2024   Bulletin 2024/38**

(73) Titulaire: **Commissariat à l'Energie Atomique et
aux Energies
Alternatives
75015 Paris (FR)**

(72) Inventeur: **BEDNARCZYK, Sophie
21120 Villey sur Tille (FR)**

(74) Mandataire: **INNOV-GROUP
209 Avenue Berthelot
69007 Lyon (FR)**

(56) Documents cités:
JP-A- S63 163 215      US-A- 4 899 289
US-A1- 2013 124 103      US-A1- 2020 116 874

EP 4 430 432 B1

## Description

## DOMAINE TECHNIQUE

Le domaine technique de l'invention est la mesure de rayonnement ionisant.

## ART ANTERIEUR

L'instrumentation pour la mesure nucléaire est à présent largement industrialisée. La plupart des détecteurs utilisés en mesure nucléaire comportent un matériau de détection, dans lequel un rayonnement ionisant est susceptible de former des interactions. Chaque interaction permet une génération de porteurs de charges, ces derniers étant collectés par un circuit de mise en forme pour former une impulsion. Le matériau de détection peut être un gaz, un liquide ou un solide.

On dispose actuellement de détecteurs sensibles, compacts, pouvant être utilisés pour le contrôle de déchets nucléaires ou pour réaliser des mesures in-situ, par exemple à des fins de caractérisation radiologique d'équipements ou d'installations nucléaires.

Cependant, un problème fréquemment rencontré est le bruit de fond. Le bruit de fond est formé par un rayonnement détecté par le détecteur, et ne provenant pas de l'objet que l'on souhaite caractériser. Il peut notamment s'agir d'un rayonnement émis dans le voisinage du détecteur. On sait que plus le bruit de fond est élevé, plus la limite de détection augmente. La limite de détection quantifie l'intensité minimale de rayonnement détectable avec un niveau de confiance suffisant. En présence d'un bruit de fond élevé, il est nécessaire d'augmenter la durée de mesure, de façon à abaisser la limite de détection. Une solution pour limiter l'influence du bruit de fond est de disposer un blindage autour du détecteur, de façon à protéger le détecteur du bruit de fond et délimiter le champ d'observation dans lequel le détecteur effectue une mesure. Lorsque le détecteur est un détecteur de photons (X ou gamma), ce qui correspond à un cas de figure fréquent, le blindage est réalisé en utilisant un matériau dense, par exemple un métal. Si l'on souhaite qu'il soit suffisamment efficace, l'épaisseur doit être relativement importante, ce qui alourdit significativement l'équipement.

L'influence du bruit de fond est néfaste lorsque l'on souhaite détecter des faibles intensités d'irradiation, en particulier dans le contrôle de déchets nucléaires faiblement irradiants ou des mesures pratiquées sur des boites à gants. L'influence du bruit de fond est également problématique dans les mesures nucléaires in-situ, en raison de la présence de différents objets, l'irradiation des uns formant un bruit de fond pour la mesure des autres.

Le document JP63163215 décrit un dispositif pour déterminer un niveau de remplissage d'un fût de déchets radioactifs. Le dispositif est basé sur une détection d'une atténuation, par le fût, d'un rayonnement émis par une source irradiante. En fonction de l'atténuation du rayonnement émis par la source irradiante, on peut détecter qu'un niveau de remplissage prédéterminé a été atteint. Le dispositif comporte un détecteur relié à un modulateur. La fonction du modulateur est de réduire l'influence de l'irradiation produite par les déchets radioactifs, déversés dans le fût, de façon à estimer l'intensité du rayonnement émis par la source irradiante. Cela permet d'estimer l'atténuation due au fût, et par conséquent le niveau de remplissage.

Le document US20200116874 décrit un imageur sensible à un rayonnement X ou gamma. L'imageur est couplé à un modulateur d'intensité tournant, agencé pour moduler l'intensité du rayonnement détecté par l'imageur. Il s'agit ici de minimiser des zones de charge d'espace qui se forment dans le détecteur sous l'influence de l'irradiation.

L'invention adresse le problème d'une caractérisation radiologique d'un objet. Il s'agit de proposer une solution compacte, de conception simple et facile à mettre en œuvre pour mesurer une intensité d'un rayonnement ionisant en présence de bruit de fond. L'objectif est d'abaisser la limite de détection.

## EXPOSE DE L'INVENTION

L'objet de l'invention est présenté par un procédé de caractérisation radiologique d'un objet selon la revendication 1. D'autres objets sont définis par les revendications dépendantes.

De préférence, quel que soit le mode de réalisation, la portion absorbante est configurée pour absorber au moins 10% de l'intensité du rayonnement incident au dispositif de détection.

Le modulateur peut être mobile en translation ou en rotation par rapport au détecteur. L'unité de commande comporte avantageusement un moteur pour déplacer le modulateur par rapport au détecteur.

Selon un mode de réalisation, le détecteur est relié à un circuit électronique configuré pour sélectionner une plage d'amplitude d'impulsions formées suite à chaque interaction d'une particule dans le détecteur, de telle sorte que le signal de détection correspond à une intensité du rayonnement détecté dans une fenêtre d'énergie prédéterminée, correspondant à la plage d'amplitude sélectionnée. La plage d'amplitude sélectionnée est de préférence réglable.

La sous-étape iii) du procédé comporte de préférence l'application d'une fonction de calibration à l'amplitude d'oscillation de la fonction d'autocorrélation. La fonction de calibration peut être établie au cours d'une phase de calibration expérimentale ou par modélisations.

Le rayonnement ionisant peut être un rayonnement neutronique ou un rayonnement photonique de type X ou gamma.

L'invention sera mieux comprise à la lecture de l'exposé des exemples de réalisation présentés, dans la suite de la description, en lien avec les figures listées ci-dessous.

## FIGURES

Les figures 1A et 1B représentent un exemple de dispositif permettant une mise en œuvre de l'invention.

La figure 2 schématise un modulateur mobile en rotation utilisé dans le dispositif décrit en lien avec les figures 1A et 1B.

La figure 3 illustre les principales étapes de la mise en œuvre de l'invention.

[La figure 4A représente un signal de détection détecté en différents instants.

La figure 4B représente un signal de détection détecté en différents instants, sans décalage temporel, ainsi que le signal de détection auquel est appliqué un décalage temporel.

La figure 4C montre un signal d'autocorrélation obtenu à partir du signal représenté sur la figure 4B.

La figure 4D illustre une fonction de calibration.

La figure 5A est une variante du modulateur mobile en rotation.

La figure 5B est une autre variante du modulateur mobile en rotation.

Les figures 5C et 5D montrent une autre variante du modulateur mobile en rotation.

Les figures 5E et 5F montrent une variante du modulateur dans laquelle le modulateur effectue un mouvement de translation.

La figure 6A montre une simulation d'un signal de détection.

La figure 6B représente un signal d'autocorrélation obtenu à partir du signal de détection représenté sur la figure 6A.

## EXPOSE DE MODES DE REALISATION PARTICULIERS

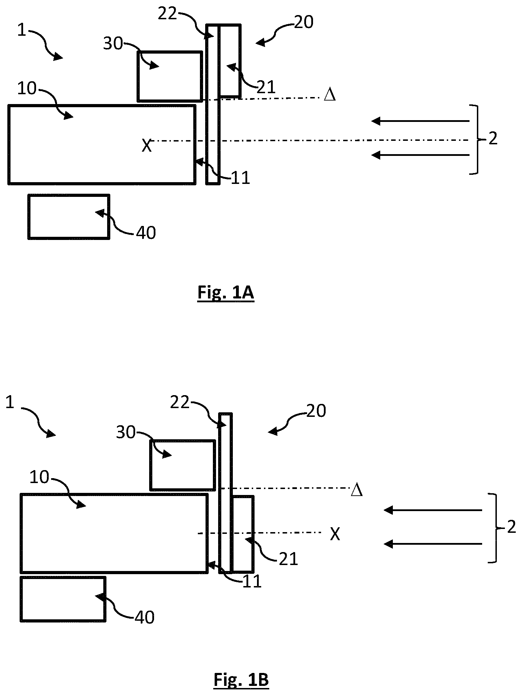

Les figures 1A et 1B représentent un exemple de dispositif de détection 1 permettant une mise en œuvre de l'invention. Le dispositif de détection comporte un détecteur 10, configuré pour détecter un rayonnement incident 2. Dans l'exemple décrit, le rayonnement incident est un rayonnement photonique ionisant, en particulier un rayonnement de type X ou γ. Il peut également s'agir d'un autre type de rayonnement ionisant, par exemple neutronique.

Le détecteur est configuré pour interagir avec les particules formant le rayonnement ionisant. Au cours de chaque interaction d'une particule dans le détecteur, des porteurs de charge sont formés, ces derniers induisant une impulsion électrique. Le détecteur génère un signal de détection S(t) à chaque instant de mesure. Le signal de mesure est un nombre d'impulsions détectées durant un intervalle temporel déterminé ou un taux de comptage, représentatif d'un nombre d'impulsions détectées par unité de temps, par exemple par seconde. Dans la pratique, on utilise usuellement le terme « coups par seconde ». Le signal de détection est corrélé avec l'intensité du rayonnement incident. L'intensité du rayonnement incident $I$ correspond à un nombre de photons atteignant le détecteur par unité de temps, généralement par seconde, ou un nombre de photons atteignant le détecteur par unité de temps ou de surface.

Le détecteur peut être de type compteur à gaz, détecteur scintillateur ou détecteur semi-conducteur. Ces détecteurs sont bien connus dans le domaine de la mesure nucléaire. Dans cet exemple, le détecteur comporte un matériau détecteur scintillateur de type NaI(Tl) (iodure de sodium dopé au Thallium) de volume 2 pouces par 2 pouces, soit environ 5 cm par 5 cm. Le matériau détecteur est couplé à un circuit électronique permettant une génération du signal de détection S(t). Le matériau détecteur comporte une surface de détection 11, à travers laquelle se propage le rayonnement incident au détecteur. Le détecteur s'étend autour d'un axe central X, ce dernier étant perpendiculaire à la surface de détection.

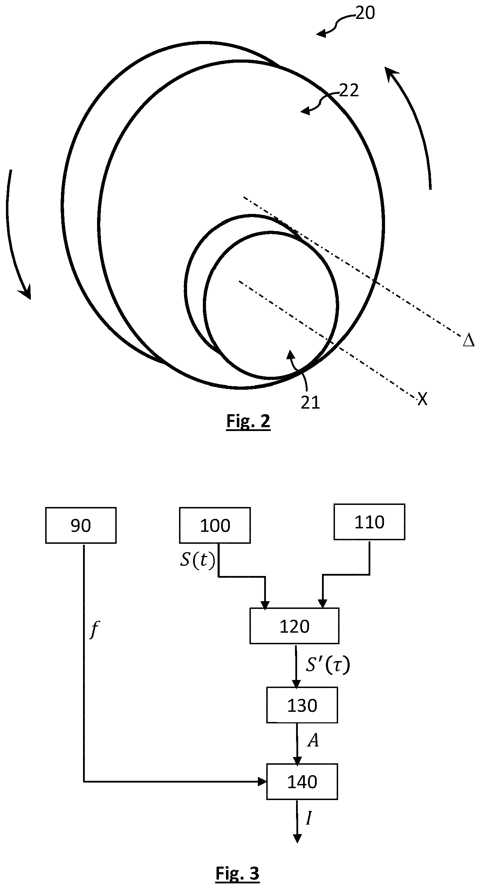

Le dispositif de détection 1 comporte un modulateur 20, destiné à moduler l'intensité du rayonnement incident au détecteur. Le modulateur 20 est disposé face au détecteur. Dans l'exemple représenté sur les figures 1A et 1B, le modulateur comporte une première portion 21, ou portion absorbante, destinée à absorber une partie du rayonnement incident. Le modulateur comporte une deuxième portion 22, servant ici de support à la première portion 21. La figure 2 schématise le modulateur 20. Dans cet exemple, la deuxième portion 22 est moins épaisse que la première portion 21, l'épaisseur étant à considérer selon l'axe central X. La portion absorbante 21 comporte de préférence un premier matériau disposant d'une absorbance élevée à l'égard des particules formant le rayonnement. Lorsque les particules sont des photons, la portion absorbante 21 peut comporter ou être constituée d'un matériau dense, par exemple un métal ou un alliage métallique, par exemple fer, cuivre, plomb, tungstène...Le support 22 est formé d'un deuxième matériau dont l'absorbance est considérée comme faible à l'égard des particules formant le rayonnement. Il peut par exemple s'agir d'un plastique ou d'aluminium. Selon une possibilité, le premier matériau et le deuxième matériau sont identiques. La portion absorbante 21 correspond à une surépaisseur du modulateur. Par exemple, la portion absorbante 21 est au moins 1.5 fois plus épaisse, voire 2 ou 3 fois plus épaisse que le support 22.

Le dispositif de détection 1 comporte une unité de commande 30, configurée pour mettre le modulateur 20 en mouvement par rapport au détecteur 10. Dans l'exemple représenté, l'unité de commande 30 permet une mise en rotation du modulateur 20 par rapport au détecteur 10. La rotation du modulateur est effectuée selon un axe de rotation Δ parallèle à l'axe central X.

Cela permet une rotation de la portion absorbante 21 par rapport au détecteur 10. Ainsi, la portion absorbante est, de façon périodique :

- disposée face au détecteur 10, de façon à absorber une partie du rayonnement incident au détecteur : le détecteur est alors dans une configuration d'absorption ;
- disposée à côté du détecteur 10, sans absorber, ou de façon négligeable, le rayonnement incident au détecteur : le détecteur est alors dans une configuration ouverte.

Par rayonnement incident au détecteur, on entend le rayonnement se propageant vers le détecteur, à travers la surface de détection 11.

Le mouvement du modulateur par rapport au détecteur est périodique, de façon que le détecteur soit périodiquement dans la configuration d'absorption et dans la configuration ouverte. La période du mouvement, ou période de modulation, peut être de l'ordre de 1 seconde. De préférence, la période de modulation est de quelques secondes : elle s'étend par exemple entre 1 seconde et 30 secondes. La période de modulation est définie pour permettre une détection d'un nombre suffisant de signaux de détection durant une même période. Elle dépend donc de la fréquence d'échantillonnage du détecteur. Dans l'exemple décrit, la période de modulation est de 20 secondes.

Le modulateur 22 permet une modulation temporelle de l'intensité du rayonnement incident au détecteur. De préférence, la modulation est supérieure à 5%, voire à 10%. Cela signifie que la portion absorbante 21 induit une absorption supplémentaire du rayonnement incident d'au moins 5%, ou au moins 10%, et de préférence au moins 50% par rapport à l'absorption produite par le modulateur lorsque le dispositif de détection est en configuration ouverte.

De préférence, l'absorption induite par la portion absorbante 21 est comprise entre 10% et 90 %, voire davantage, de l'intensité du rayonnement incident au dispositif de détection. Par intensité du rayonnement incident au dispositif de détection, on entend l'intensité du rayonnement se propageant vers le dispositif de détection, l'intensité étant déterminée en amont du modulateur.

Le terme absorption est connu de l'homme du métier. L'absorption $abs_{21}$ de la portion absorbante 21 peut être exprimée selon l'expression :

$$abs_{21} = -ln\left[\frac{I_{21}}{I}\right],$$

où :

- $I_{21}$ désigne l'intensité du rayonnement incident au détecteur dans la configuration d'absorption, c'est-à-dire l'intensité du rayonnement traversant la portion absorbante 21 et se propageant vers le détecteur 10.
- $I$ désigne l'intensité du rayonnement au détecteur en l'absence d'écran face au détecteur.

L'absorption $abs_{22}$ du support 22 peut également être exprimée comme suit :

$$abs_{22} = -ln\left[\frac{I_{22}}{I}\right],$$

où $I_{22}$ désigne l'intensité du rayonnement incident au détecteur dans la configuration ouverte, c'est-à-dire l'intensité du rayonnement traversant le support 22 et se propageant vers le détecteur 10.

Compte tenu de ce qui précède, le modulateur est tel que $abs_{21} \geq abs_{22}$ et de préférence $abs_{21} \geq 1.05$ $abs_{22}$ et encore de préférence $abs_{21} \geq 1.1$ $abs_{22}$.voire $abs_{21} \geq 1.5$ $abs_{22}$ ou $abs_{21} \geq 2$ $abs_{22}$.Le ratio entre $abs_{21}$ et $abs_{22}$ est un contraste d'absorption. Il est préférable que ce dernier soit le plus élevé possible.

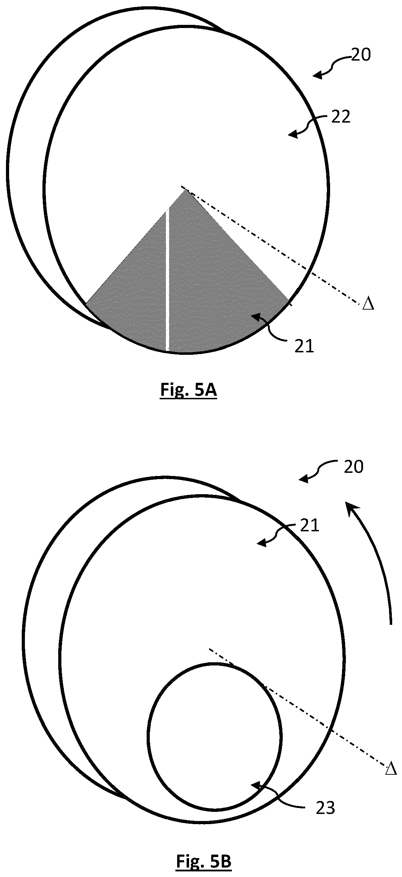

D'autres configurations du modulateur sont possibles, comme décrit par la suite en lien avec les figures 5A à 5E.

Le dispositif comporte une unité de traitement 40, configurée pour recevoir le signal de détection S(t) en différents instants d'une même période de modulation. L'unité de traitement est programmée pour mettre en œuvre des étapes de calcul décrites en lien avec la figure 3. L'unité de traitement peut notamment comporter un microprocesseur.

La figure 3 schématise les principales étapes de la mise en œuvre de l'invention.

L'étape 100 correspond à l'étape de détection du rayonnement incident en différents instants de détection t s'étendant sur au moins une demi période de modulation et de préférence selon une ou plusieurs périodes de modulation. De préférence, le signal de détection est généré à une fréquence telle que plusieurs signaux de détection consécutifs sont produits durant chaque période de modulation. De préférence, au moins 10 signaux de détection, voire plusieurs dizaines de signaux de détection, sont générés au cours de chaque période de modulation. L'intensité $I$ du rayonnement incident au dispositif de détection 1 est supposée constante , aux fluctuations statistiques près, durant les périodes de modulation,. L'intensité du rayonnement incident est généralement considérée comme distribuée selon une loi de Poisson.

Parallèlement à l'étape 100, l'unité de commande 30 met en mouvement le modulateur 20, de façon à obtenir une modulation périodique de l'intensité du rayonnement incident au détecteur : cela correspond à l'étape 110.

Au cours de l'étape 120, l'unité de traitement 40 effectue un traitement des signaux de détection S(t) acquis durant l'étape 100. Le traitement consiste à prendre en compte différents décalages temporels $\tau$, chaque décalage temporel étant compris entre 0 et $nT$ ou $n$ est réel de préférence supérieur ou égal à 1 et $T$ est la période de modulation.

Ainsi, le traitement vise à générer un signal d'autocorrélation $S'(\tau)$ tel que :

$$S'(\tau) = \int_0^{nT} S(t)S(t-\tau)dt \quad (1)$$

- $n$ est un réel, de préférence supérieur ou égal à 1 ; $n$ peut être un entier.
- $T$ est la période de modulation.

L'expression (1) est établie en supposant que les signaux de détection sont acquis à une fréquence d'acquisition telle que la fonction $S(t)$ puisse être considérée comme continue.

En prenant en compte la discrétisation temporelle du signal de détection, l'expression (1) peut être équivalente à :

$$S'(\tau) \propto \sum_0^{nT} S(t)S(t-\tau) \quad (2)$$

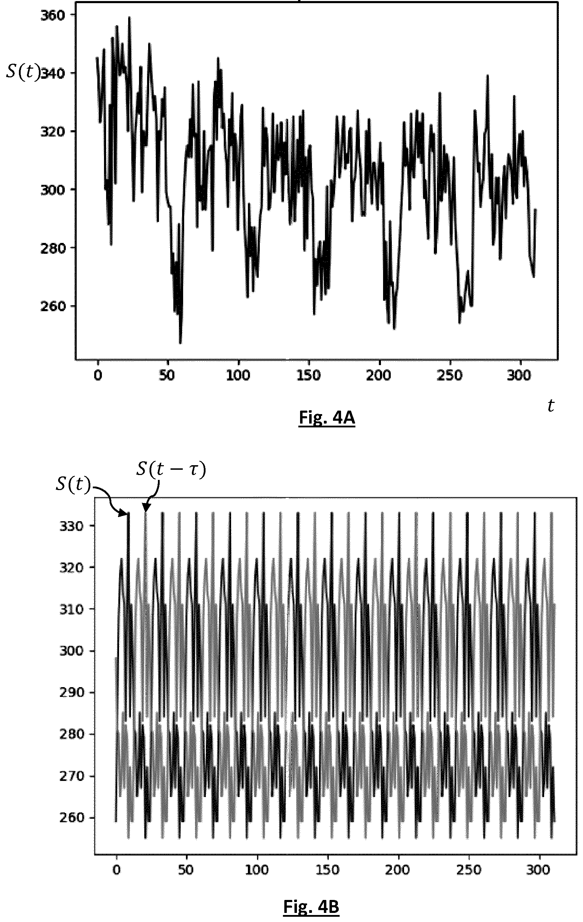

La figure 4A représente un exemple de signaux de détection, résultant de l'exposition d'un dispositif tel que précédemment décrit à une source irradiante de $^{152}$Eu. Sur la figure 4A, l'axe des abscisses correspond au temps et l'axe des ordonnées correspond au signal de détection $S(t)$, en l'occurrence un comptage durant une durée de 330 secondes.

On observe qu'au cours de chaque période, le signal de détection oscille entre :

- un signal maximal, lorsque la portion absorbante n'est pas disposée face au détecteur ;
- un signal minimal, lorsque la portion absorbante est disposée face au détecteur.

La figure 4B représente un signal de détection $S(t)$ (en noir) ainsi qu'un signal temporellement décalé $S(t-\tau)$ (en gris) avec $\tau = 12$.

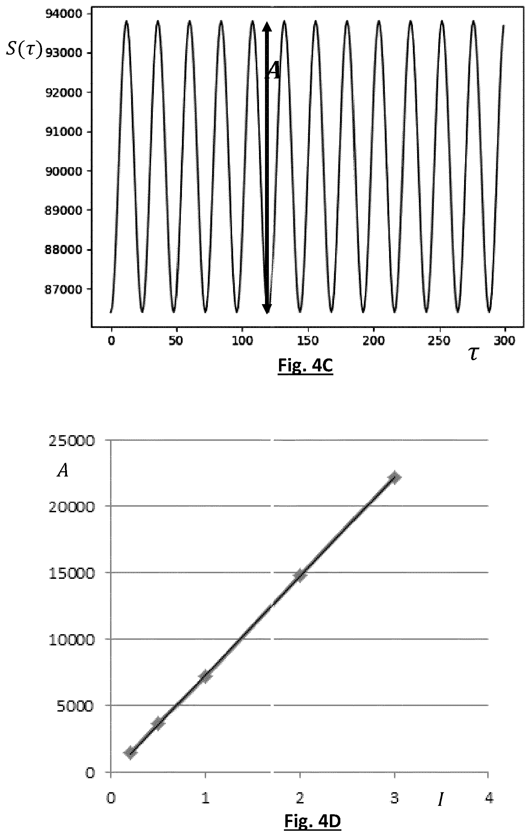

La figure 4C représente le signal d'autocorrélation $S'(\tau)$ tel qu'exprimé dans (1) établi à partir du signal de détection représenté sur la figure 4B. Sur la figure 4C, l'axe des abscisses correspond au décalage temporel $\tau$.

On observe que le signal d'autocorrélation $S'(\tau)$ suit une variation périodique, dont la période correspond à la période de modulation $T$. Le signal d'autocorrélation forme, lors de chaque période, une oscillation d'amplitude $A$. Au cours de l'étape 130, on détermine l'amplitude $A$ d'au moins une oscillation, ou une amplitude moyenne de plusieurs oscillations. L'étape 130 peut comporter un lissage du signal d'autocorrélation $S'(\tau)$, par l'application d'un filtre passe bas, de façon à lisser d'éventuelles fluctuations statistiques.

Au cours de l'étape 140, on détermine l'intensité du rayonnement ionisant $I$. L'intensité $I$ du rayonnement ionisant incident au dispositif de détection 1 est corrélée à l'amplitude $A$ du signal d'autocorrélation $S'(\tau)$. D'une façon générale, on peut utiliser une fonction de calibration $f$, de telle sorte que $I = f(A)$. L'intensité peut être exprimée par unité de temps (par exemple photons par seconde), auquel cas il s'agit d'un flux, où en unité de temps et de surface, auquel cas il s'agit d'un débit de fluence (par exemple nombre de photons par cm$^2$ par seconde).

La fonction de calibration $f$ peut être déterminée lors d'une étape de calibration, qui correspond à l'étape 90 schématisée sur la figure 3. La calibration consiste à mettre en œuvre les étapes 100 à 130 alors que l'intensité $I$ du rayonnement incident au dispositif 1 est connue. L'amplitude $A$ du signal d'autocorrélation est mesurée pour différentes valeurs d'intensité, ce qui permet une détermination empirique de la fonction de calibration. La figure 4D représente un exemple de fonction de calibration. Sur la figure 4D, l'axe des abscisses correspond à l'intensité $I$ du rayonnement incident (unité arbitraire) tandis que l'axe des ordonnées correspond à l'amplitude $A$ du signal d'autocorrélation. La fonction de calibration peut également être déterminée sur la base de modélisations.

Les figures 5A à 5$^E$ schématisent d'autres configurations possibles du modulateur 20. Sur l'exemple de la figure 5A, l'épaisseur de la portion absorbante 21 est similaire à l'épaisseur du support 22. La portion absorbante est formée d'un matériau plus absorbant que le support. Par exemple, le support est formé de plastique tandis que la portion absorbante comporte un métal choisi parmi Fe, Cu, Pb, W.

Sur l'exemple de la figure 5B, le modulateur comporte une portion absorbante 21 délimitant une ouverture 23. L'absorption de l'ouverture est nulle. Selon cette configuration, la deuxième partie du modulateur 20 n'est pas un support 22, comme précédemment décrit, mais l'ouverture 23.

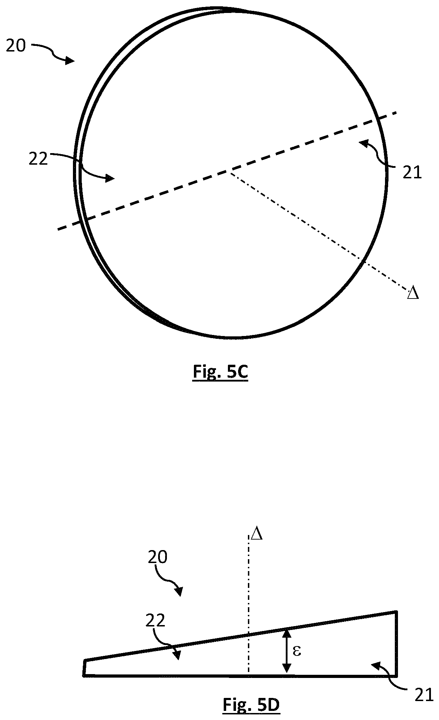

Sur l'exemple des figures 5C et 5D, le modulateur est formé d'un seul matériau, d'épaisseur variable. La portion absorbante 21 correspond à une portion du modulateur dont l'épaisseur est au delà d'une épaisseur seuil $\varepsilon$. La figure 5D est une vue en coupe du modulateur représenté sur la figure 5C, la coupe étant effectuée selon la ligne en pointillés représentée sur la figure 5C.

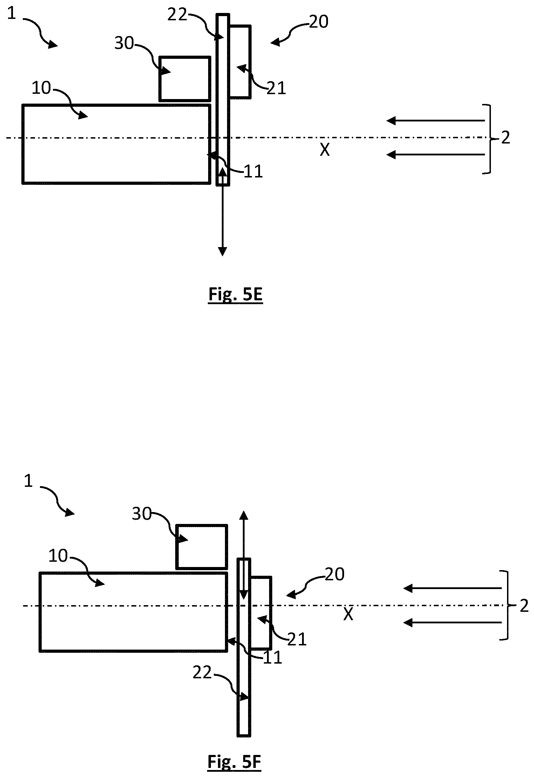

Les figures 5$^E$ et 5F schématisent une configuration selon laquelle le modulateur 20 est mobile en translation, perpendiculairement à l'axe central X. Comme décrit en lien avec la figure 2, le modulateur comporte une portion absorbante 21, qui est amenée périodiquement en face du détecteur 10, de façon à moduler l'intensité du rayonnement incident au détecteur. La figure 5$^E$ représente le dispositif selon une configuration ouverte. La figure 5F représente le dispositif selon une configuration fermée.

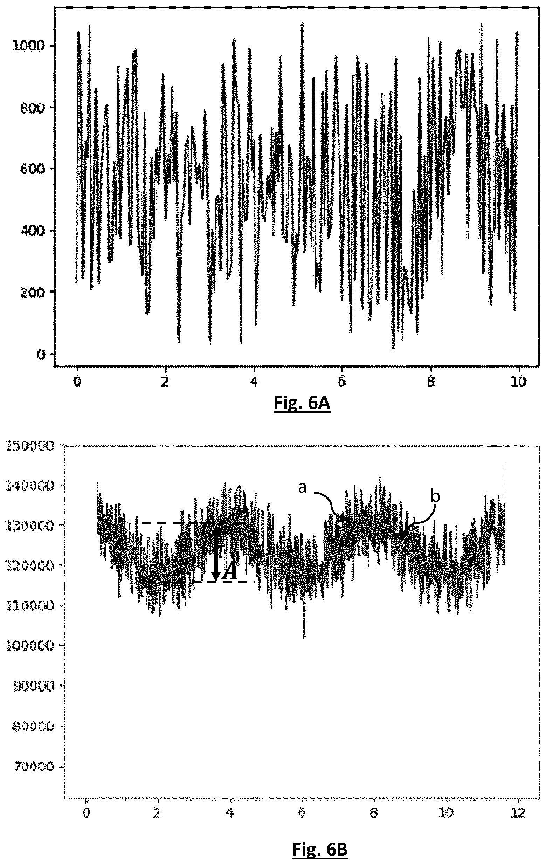

Un avantage de l'invention est de pouvoir estimer une intensité d'un rayonnement en présence d'un fort bruit de fond. La figure 6A représente une simulation d'un signal de détection $S(t)$ (axe des ordonnées) en fonction du temps (axe des abscisses - unité arbitraire) en présence d'un rayonnement incident mais également d'un fort bruit de fond. La modulation de l'intensité du rayonnement incident est à peine perceptible en raison du bruit de fond.

La figure 6B est une simulation d'un signal d'autocorrélation $S'(\tau)$ (axe des ordonnées) établi à partir du signal de détection représenté sur la figure 6A. Sur la figure 6B, on a représenté le signal d'autocorrélation respectivement sans filtrage passe-bas (courbe sombre a) et après application d'un filtre passe-bas (courbe claire b). En dépit du bruit de fond observé sur la figure 6A, on observe que l'invention permet d'obtenir, moyennant un lissage, un signal d'autocorrélation exploitable. L'amplitude des oscillations du signal d'autocorrélation peut être déterminée sans difficulté.

Selon une possibilité, l'invention peut être appliquée en effectuant un comptage dans une fenêtre d'énergie prédéterminée. Le détecteur est alors relié à un circuit électronique permettant de classer les impulsions détectées en fonction de leur amplitude, chaque amplitude correspondant à une énergie libérée dans le détecteur. Ainsi, seules les impulsions dont l'amplitude est située dans une plage d'amplitude prédéterminée forment le signal de détection. La plage d'amplitude est sélectionnée en fonction de la fenêtre d'énergie que l'on souhaite adresser. La relation entre l'amplitude des impulsions et l'énergie libérée lors de l'interaction donnant lieu à l'interaction est supposée connue.

Le recours à un tel circuit électronique est classique dans le domaine de la spectrométrie gamma. La fenêtre d'énergie est avantageusement réglable. Par exemple, lorsque le détecteur est placé face à un objet susceptible de contenir du $^{137}$Cs, la fenêtre d'énergie peut être centrée sur 662 keV, et de largeur égale à quelques keV ou quelques dizaines de keV, en fonction de la résolution en énergie du détecteur. La fenêtre d'énergie peut être de quelques keV lorsque le détecteur est un détecteur présentant une bonne résolution, typiquement un détecteur Germanium hyper pur (GeHP), ou de quelques dizaines de keV lorsque la résolution est moyenne, typiquement avec un détecteur scintillateur de type Nal(Tl). La fenêtre d'énergie est avantageusement centrée sur une énergie d'émission d'un radionucléide que l'on souhaite caractériser.

Un tel mode de réalisation permet d'améliorer significativement la sensibilité de détection dans la fenêtre d'énergie sélectionnée. On peut successivement modifier la fenêtre d'énergie, de façon à adresser successivement différentes énergies d'émission d'un radionucléide ou de différents radionucléides.

L'invention est appliquée pour la caractérisation radiologique (mesure d'activité ou de spectre d'émission) de déchets nucléaires ou d'équipements en présence de bruit de fond. Le recours à un modulateur mobile, et de préférence motorisé, permet d'effectuer des mesures en utilisant un dispositif compact et de conception simple. Bien que très peu sensible au bruit de fond, l'invention peut être aussi combinée à l'utilisation d'un blindage formant une gaine autour du détecteur, et délimitant un champ d'observation. Dans ce cas, le modulateur est disposé dans le champ d'observation, entre le détecteur et l'objet à caractériser. Le recours à un blindage n'est pas nécessaire.

Bien que décrit en lien avec un scintillateur Nal(Tl), l'invention peut être mise en œuvre avec des détecteurs gazeux, par exemple une chambre d'ionisation, ou un détecteur solide : scintillateur, par exemple de type Csl, LaBr$_3$, ou semi-conducteur, par exemple Si, GeHP...

**Revendications**

1. Procédé de caractérisation radiologique d'un objet émettant un rayonnement ionisant, le procédé comportant les étapes suivantes :

    - a) disposition d'un dispositif (1) face à l'objet, le dispositif comportant :
    - un détecteur du rayonnement ionisant (10), le détecteur étant configuré pour interagir avec des particules formant le rayonnement ionisant et pour générer un signal de détection dépendant d'une intensité du rayonnement ionisant incident au détecteur ;
    - un modulateur (20), le modulateur comportant au moins une portion absorbante (21), la portion absorbante étant configurée pour absorber une partie du rayonnement ionisant ;
    - une unité de commande (30), configurée pour mettre en mouvement le modulateur, de façon que la portion absorbante soit périodiquement disposée face au détecteur, de façon à absorber périodiquement le rayonnement incident au détecteur, de telle sorte que le signal de détection oscille périodiquement entre

        • un signal maximal, lorsque la portion absorbante n'est pas disposée face au détecteur ;
        • un signal minimal, lorsque la portion absorbante est disposée face au détecteur ;

    - une unité de traitement (40), programmée pour :

        • i) mémoriser des signaux de détection (S(t)) générés par le détecteur, en différents instants de détection, les instants de détection étant répartis selon au moins une période du signal de détection ;
        • ii) calculer une fonction d'autocorrélation

($S'(\tau)$) du signal de détection, la fonction d'autocorrélation étant une fonction périodique dont la période est la période du signal de détection ;

• iii) à partir d'une amplitude d'oscillation ($A$) de la fonction d'autocorrélation selon au moins une période, estimation de l'intensité ($I$) du rayonnement incident au dispositif de détection ;

- b) à l'aide de l'unité de commande, mise en mouvement périodique du modulateur (20) par rapport au détecteur ;
- c) durant l'étape b), acquisition de signaux de détection, générés par le détecteur en différents instants durant au moins une période du mouvement du modulateur ;
- d) à l'aide de l'unité de traitement,

• i) mémorisation des signaux de détection ($S(t)$) générés par le détecteur lors de l'étape c)
• ii) calcul d'une fonction d'autocorrélation ($S'(\tau)$) du signal de détection, la fonction d'autocorrélation étant périodique ;
• iii) détermination d'une amplitude d'oscillation ($A$) de la fonction d'autocorrélation durant au moins une période et estimation de l'intensité du rayonnement incident du dispositif de détection ;

et caractérisation radiologique de l'objet en fonction de l'intensité estimée.

2. Procédé selon la revendication 1, dans lequel la fonction d'autocorrélation est définie pour différents décalages temporels, la fonction d'autocorrélation, à chaque décalage temporel ($\tau$), étant calculée à partir d'une somme, selon une durée d'au moins une demi-période, de chaque signal de détection ($S(t)$) mesuré pendant ladite durée multiplié par ledit signal de détection ($S(t - \tau)$) décalé du décalage temporel.

3. Procédé selon l'une quelconque des revendications précédentes, dans lequel le modulateur comporte :

- un premier matériau, d'une première épaisseur, formant la portion absorbante (21) ;
- un deuxième matériau, d'une deuxième épaisseur, formant un support de la portion absorbante (22) ;

le modulateur étant tel que la portion absorbante présente une absorption du rayonnement incident au détecteur supérieure à l'absorption du support.

4. Procédé selon la revendication 3, dans lequel l'absorption de la portion absorbante est au moins 10% supérieure à l'absorption du support.

5. Procédé selon l'une quelconque des revendications 1 ou 2, dans lequel le modulateur est formé d'un premier matériau, d'épaisseur variable entre une épaisseur minimale et une épaisseur maximale, la portion absorbante étant formée par une partie du matériau comportant l'épaisseur maximale.

6. Procédé selon l'une quelconque des revendications 1 ou 2, dans lequel le modulateur comporte :

- un premier matériau, formant la portion absorbante (21) ;
- une ouverture (23), formée à travers le premier matériau.

7. Procédé selon l'une quelconque des revendications précédentes, dans lequel la portion absorbante est configurée pour absorber au moins 10% de l'intensité du rayonnement incident au dispositif de détection.

8. Procédé selon l'une quelconque des revendications précédentes, dans lequel le modulateur (20) est mobile en translation ou en rotation par rapport au détecteur.

9. Procédé selon l'une quelconque des revendications précédentes, dans lequel l'unité de commande comporte un moteur pour mettre le modulateur en mouvement par rapport au détecteur.

10. Procédé selon l'une quelconque des revendications précédentes, dans lequel le détecteur est relié à un circuit électronique configuré pour sélectionner une plage d'amplitude d'impulsions formées suite à chaque interaction d'une particule dans le détecteur, de telle sorte que le signal de détection correspond à une intensité du rayonnement détecté dans une fenêtre d'énergie prédéterminée, correspondant à la plage d'amplitude sélectionnée.

11. Procédé selon la revendication 10, dans lequel la plage d'amplitude sélectionnée est réglable.

12. Procédé selon l'une quelconque des revendications précédentes, dans lequel la sous-étape iii) comporte l'application d'une fonction de calibration ($f$) à l'amplitude d'oscillation ($A$) de la fonction d'autocorrélation.

13. Procédé selon l'une quelconque des revendications précédentes, dans lequel le rayonnement ionisant est un rayonnement neutronique ou un rayonnement photonique de type X ou gamma.

## Patentansprüche

1. Verfahren zur radiologischen Charakterisierung eines eine ionisierende Strahlung emittierenden Objekts, wobei das Verfahren die folgenden Schritte umfasst:

   - a) Anordnen einer Vorrichtung (1) gegenüber dem Objekt, wobei die Vorrichtung umfasst:
   - einen Detektor (10) für ionisierende Strahlung, wobei der Detektor dazu ausgebildet ist, mit Teilchen zu interagieren, welche die ionisierende Strahlung bilden, und ein Detektionssignal zu erzeugen, das von einer Intensität der auf den Detektor einfallenden ionisierenden Strahlung abhängt;
   - einen Modulator (20), wobei der Modulator mindestens einen absorbierenden Abschnitt (21) umfasst, wobei der absorbierende Abschnitt dazu ausgebildet ist, einen Teil der ionisierenden Strahlung zu absorbieren;
   - eine Steuereinheit (30), die dazu ausgebildet ist, den Modulator in Bewegung zu versetzen, so dass der absorbierende Abschnitt periodisch gegenüber dem Detektor angeordnet ist, so dass die auf den Detektor einfallende Strahlung periodisch absorbiert wird, so dass das Detektionssignal periodisch oszilliert zwischen

     • einem maximalen Signal, wenn der absorbierende Abschnitt nicht gegenüber dem Detektor angeordnet ist;
     • einem minimalen Signal, wenn der absorbierende Abschnitt gegenüber dem Detektor angeordnet ist;

   - eine Verarbeitungseinheit (40), die dazu programmiert ist:

     • i) Detektionssignale (S(t)) zu speichern, die von dem Detektor zu verschiedenen Detektionszeitpunkten erzeugt werden, wobei die Detektionszeitpunkte gemäß mindestens einer Periode des Detektionssignals verteilt sind;
     • ii) eine Autokorrelationsfunktion (S'($\tau$)) des Detektionssignals zu berechnen, wobei die Autokorrelationsfunktion eine periodische Funktion ist, deren Periode die Periode des Detektionssignals ist;
     • iii) ausgehend von einer Oszillationsamplitude (A) der Autokorrelationsfunktion gemäß mindestens einer Periode, Schätzen der Intensität (I) der auf die Detektionsvorrichtung einfallenden Strahlung;

   - b) mithilfe der Steuereinheit, periodisches Inbewegungversetzen des Modulators (20) in Bezug auf den Detektor;
   - c) während des Schritts b), Erfassen von Detektionssignalen, die von dem Detektor zu verschiedenen Zeitpunkten während mindestens einer Periode der Bewegung des Modulators erzeugt werden;
   - d) mithilfe der Verarbeitungseinheit,

     • i) Speichern der Detektionssignale (S(t)), die von dem Detektor bei dem Schritt c) erzeugt werden
     • ii) Berechnen einer Autokorrelationsfunktion (S'($\tau$)) des Detektionssignals, wobei die Autokorrelationsfunktion periodisch ist;
     • iii) Bestimmen einer Oszillationsamplitude (A) der Autokorrelationsfunktion während mindestens einer Periode und Schätzen der Intensität der einfallenden Strahlung der Detektionsvorrichtung;

   und radiologische Charakterisierung des Objekts in Abhängigkeit von der geschätzten Intensität.

2. Verfahren nach Anspruch 1, wobei die Autokorrelationsfunktion für verschiedene zeitliche Versätze definiert ist, wobei die Autokorrelationsfunktion bei jedem zeitlichen Versatz ($\tau$) ausgehend von einer Summe, gemäß einer Dauer von mindestens einer Halbperiode, jedes während der Dauer gemessenen Detektionssignals (S(t)), multipliziert mit dem um den zeitlichen Versatz versetzten Detektionssignal (S(t - $\tau$)), berechnet wird.

3. Verfahren nach einem der vorhergehenden Ansprüche, wobei der Modulator umfasst:

   - ein erstes Material mit einer ersten Dicke, das den absorbierenden Abschnitt (21) bildet;
   - ein zweites Material mit einer zweiten Dicke, das einen Träger (22) des absorbierenden Abschnitts bildet;

   wobei der Modulator dergestalt ist, dass der absorbierende Abschnitt eine Absorption der auf den Detektor einfallenden Strahlung aufweist, die größer als die Absorption des Trägers ist.

4. Verfahren nach Anspruch 3, wobei die Absorption des absorbierenden Abschnitts um mindestens 10 % größer als die Absorption des Trägers ist.

5. Verfahren nach einem der Ansprüche 1 oder 2, wobei der Modulator aus einem ersten Material mit einer zwischen einer minimalen Dicke und einer maximalen Dicke variablen Dicke gebildet ist, wobei der absorbierende Abschnitt durch einen die maximale Dicke umfassenden Teil des Materials gebildet wird.

**6.** Verfahren nach einem der Ansprüche 1 oder 2, wobei der Modulator umfasst:

- ein erstes Material, das den absorbierenden Abschnitt (21) bildet;
- eine Öffnung (23), die durch das erste Material hindurch gebildet ist.

**7.** Verfahren nach einem der vorhergehenden Ansprüche, wobei der absorbierende Abschnitt dazu ausgebildet ist, mindestens 10 % der Intensität der auf die Detektionsvorrichtung einfallenden Strahlung zu absorbieren.

**8.** Verfahren nach einem der vorhergehenden Ansprüche, wobei der Modulator (20) in Bezug auf den Detektor translatorisch oder rotatorisch beweglich ist.

**9.** Verfahren nach einem der vorhergehenden Ansprüche, wobei die Steuereinheit einen Motor umfasst, um den Modulator in Bezug auf den Detektor in Bewegung zu versetzen.

**10.** Verfahren nach einem der vorhergehenden Ansprüche, wobei der Detektor an eine elektronische Schaltung angeschlossen ist, die dazu ausgebildet ist, einen Amplitudenbereich von nach jeder Interaktion eines Teilchens in dem Detektor gebildeten Impulsen auszuwählen, so dass das Detektionssignal einer Intensität der detektierten Strahlung in einem vorbestimmten Energiefenster entspricht, die dem ausgewählten Amplitudenbereich entspricht.

**11.** Verfahren nach Anspruch 10, wobei der ausgewählte Amplitudenbereich einstellbar ist.

**12.** Verfahren nach einem der vorhergehenden Ansprüche, wobei der Teilschritt iii) das Anwenden einer Kalibrierungsfunktion (f) auf die Oszillationsamplitude (A) der Autokorrelationsfunktion umfasst.

**13.** Verfahren nach einem der vorhergehenden Ansprüche, wobei die ionisierende Strahlung eine Neutronenstrahlung oder eine Photonenstrahlung vom Röntgen- oder Gammatyp ist.

**Claims**

**1.** Method for radiological characterization of an object emitting ionizing radiation, the method comprising the following steps:

- a) arranging a device (1) opposite the object, the device comprising:
- an ionizing radiation detector (10), the detector being configured to interact with particles forming the ionizing radiation and to generate a detection signal dependent on an intensity of the ionizing radiation incident on the detector;
- a modulator (20), the modulator comprising at least one absorbing portion (21), the absorbing portion being configured to absorb a portion of the ionizing radiation;
- a control unit (30), configured to move the modulator so that the absorbing portion is periodically disposed opposite the detector, so as to periodically absorb the radiation incident on the detector, such that the detection signal periodically oscillates between

• a maximum signal, when the absorbing portion is not disposed facing the detector;
• a minimum signal, when the absorbing portion is disposed opposite the detector;

- a processing unit (40), programmed to:

• i) storing detection signals (S(t)) generated by the detector at different detection times, the detection times being distributed according to at least one period of the detection signal;
• ii) calculate an autocorrelation function ($S'(\tau)$) of the detection signal, the autocorrelation function being a periodic function whose period is the period of the detection signal;
• iii) based on an oscillation amplitude (A) of the autocorrelation function according to at least one period, estimating the intensity (I) of the radiation incident on the detection device;

- b) using the control unit, periodically moving the modulator (20) relative to the detector;
- c) during step b), acquisition of detection signals generated by the detector at different times during at least one period of the modulator's movement;
- d) using the processing unit,

• i) storing the detection signals (S(t)) generated by the detector during step c)
• ii) calculating an autocorrelation function ($S'(\tau)$) of the detection signal, the autocorrelation function being periodic;
• iii) determining an oscillation amplitude (A) of the autocorrelation function during at least one period and estimating the intensity of the incident radiation of the detection device;

and radiological characterization of the object based on the estimated intensity.

2. Method according to claim 1, in which the autocorrelation function is defined for different time shifts, the autocorrelation function at each time shift ($\tau$) being calculated from a sum, over a duration of at least half a period, of each detection signal (S(t)) measured during said duration multiplied by said detection signal ($S(t - \tau)$) shifted by the time shift.

3. Method according to any of the preceding claims, wherein the modulator comprises:

   - a first material, of a first thickness, forming the absorbent portion (21);
   - a second material, of a second thickness, forming a support for the absorbing portion (22);

   the modulator being such that the absorbing portion has an absorption of incident radiation at the detector greater than the absorption of the support.

4. Method according to claim 3, wherein the absorption of the absorbing portion is at least 10% greater than the absorption of the support.

5. Method according to any of claims 1 or 2, wherein the modulator is formed of a first material, of variable thickness between a minimum thickness and a maximum thickness, the absorbing portion being formed by a part of the material having the maximum thickness.

6. Method according to any of claims 1 or 2, wherein the modulator comprises:

   - a first material, forming the absorbent portion (21);
   - an opening (23) formed through the first material.

7. Method according to any of the preceding claims, wherein the absorbing portion is configured to absorb at least 10% of the intensity of the radiation incident on the detection device.

8. Method according to any of the preceding claims, wherein the modulator (20) is movable in translation or rotation relative to the detector.

9. A method according to any of the preceding claims, wherein the control unit comprises a motor for moving the modulator relative to the detector.

10. Method according to any of the preceding claims, wherein the detector is connected to an electronic circuit configured to select a range of amplitudes of pulses formed following each interaction of a particle in the detector, such that the detection signal corresponds to an intensity of radiation detected in a predetermined energy window corresponding to the selected range of amplitude.

11. Method according to claim 10, wherein the selected amplitude range is adjustable.

12. Method according to any of the preceding claims, wherein sub-step iii) comprises applying a calibration function (f) to the oscillation amplitude ($A$) of the autocorrelation function.

13. Method according to any of the preceding claims, wherein the ionizing radiation is neutron radiation or X-ray or gamma-ray photon radiation.

**Fig. 1A**

**Fig. 1B**

**Fig. 2**

**Fig. 3**

**Fig. 4A**

**Fig. 4B**

Fig. 4C

Fig. 4D

Fig. 5A

Fig. 5B

**Fig. 5C**

**Fig. 5D**

**Fig. 5E**

**Fig. 5F**

Fig. 6A

Fig. 6B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 63163215 B

- US 20200116874 A